# EUROPÄISCHE PATENTSCHRIFT

(11) **EP 1 413 397 B1**
(45) Veröffentlichungstag und Bekanntmachung des Hinweises auf die Patenterteilung: **07.09.2005**
(21) Anmeldenummer: 03024282.0
(22) Anmeldetag: 23.10.2003
(51) Int. Cl.: B24D 5/00, B24B 9/10, B24B 55/02

(54) **Einrichtung zum Bearbeiten des Randes eines Gegenstandes**
Device for machining the edge of a workpiece
Dispositif pour l'usinage d'un bord de pièce

(30) Priorität: 24.10.2002 DE 10249578
(43) Veröffentlichungstag der Anmeldung: 28.04.2004
(73) Patentinhaber: Rohmer + Stimpfig Maschinen- und Apparatebau GmbH, 90765 Fürth (DE)
(72) Erfinder: Stimpfig, Friedrich, 90766 Fürth (DE)
(74) Vertreter: LOUIS, PÖHLAU, LOHRENTZ

(56) Entgegenhaltungen:
- WO-A-99/36225
- DE-A- 4 326 023
- DE-U- 20 211 366
- SU-A- 1 021 565
- US-A- 4 669 933
- US-A1- 2002 054 976
- PATENT ABSTRACTS OF JAPAN vol. 2000, no. 24, 11. Mai 2001 (2001-05-11) & JP 2001 198768 A (YAMAZAKI CO LTD), 24. Juli 2001 (2001-07-24)

## Beschreibung

Die Erfindung betrifft eine Einrichtung gemäß dem Oberbegriff des Anspruches 1 zum Bearbeiten des Randes eines Gegenstandes die aus dem Dokument DE 4 326 023 bekannt ist. Bei dem Gegenstand kann es sich um ein Flachglas-Produkt oder um ein Hohlglas-Produkt handeln. Auch Stein- oder Keramik-Gegenständekönnen können mit der Einrichtung bearbeitet werden. Bei dem Kühlmedium kann es sich um ein Kühlwasser oder um ein gekühltes Gas, z.B. gekühlte Luft, handeln. Bei dem Werkzeug kann es sich beispielsweise auch um ein Fräswerkzeug handeln.

Beim Bearbeiten, d.h. insbesondere beim Schleifen oder beim Polieren, beispielsweise des Randes von Flachglas-Produkten wie Regalböden, Glastüren, Kraftfahrzeug-Scheiben, usw. entsteht Wärme, die abgeführt werden muss, um eine optimale Randbearbeitung der Flachglas-Produkte zu gewährleisten. Entsprechendes gilt auch für beliebige andere Gegenstände, wie Hohlglas-Produkte, Stein- oder Keramikgegenstände usw. Zur Wärmeabfuhr, d.h. zur Kühlung, wird beispielsweise eine Kühlflüssigkeit, insbesondere Kühlwasser, verwendet. Anstelle von Kühlflüssigkeit kann auch ein Kühlgas verwendet werden.

Eine bekannte Einrichtung der eingangs genannten Art weist eine Kühleinrichtung mit einer Anzahl Gelenkschläuche auf, die zum Bearbeitungs-, d.h. Schleif- oder Polier-Werkzeug, konzentrisch angeordnet sind. Diese Gelenkschläuche müssen einzeln eingestellt werden. Das stellt einen nicht zu vernachlässigenden Zeit- und Arbeitsaufwand dar, weshalb oftmals bei einem Werkzeugwechsel, d.h. beim Austausch einer Schleif- oder Polierscheibe eines bestimmten Durchmessers durch eine Schleif- oder Polierscheibe eines anderen Durchmessers, darauf verzichtet wird, die Gelenkschläuche dem neuen Werkzeug entsprechend einzustellen. Um auch bei einer solchen nicht optimalen Einstellung der Gelenkschläuche eine ausreichende Kühlung zu bewirken, ist bei bekannten Einrichtungen die Kühlflüssigkeitsmenge, d.h. der Kühlwasserverbrauch, sehr groß. Das stellt beispielsweise unter Umweltgesichtspunkten einen Mangel dar. Die besagten Gelenkschläuche ergeben also oftmals keine Zielorientierung, d.h. keine genaue Lenkung der Kühlflüssigkeit, d.h. des Kühlwassers, zur Bearbeitungs-, d.h. Schleif- oder Polierstelle am Rand des zu bearbeitenden Flachglas-Produktes.

Aus der DD 256 277 A1 ist eine Einrichtung mit einem um eine Achse rotierenden Werkzeug und mit einer dem Werkzeug zugeordneten Kühleinrichtung für eine Kühlflüssigkeit bekannt. Bei dieser bekannten Einrichtung ist die Kühleinrichtung von einem flexiblen Schlauch oder einem flexiblen Rohr gebildet, die das zu kühlende Werkzeug bogenförmig, d.h. einseitig offen umgibt. Der Schlauch oder das Rohr ist an seiner dem zu kühlenden Werkzeug zugewandten Innenseite in Umfangsrichtung verteilt mit Düsenöffnungen ausgebildet. Der flexible Schlauch bzw. das flexible Rohr ist in Bezug auf das zu kühlende Werkzeug einseitig offen, um den Schlauch bzw. das Rohr um seine bogenförmig gekrümmte Längsachse verschwenken und somit den Winkel zwischen der Rotationsachse des zu kühlenden Werkzeuges und den Düsenöffnungen ein- bzw. verstellen zu können. An dem nicht geschlossenen Umfangsabschnitt des Schlauches oder Rohres ist eine Kühlung des Werkzeuges nicht oder nur sehr bedingt möglich.

Aus der DE 43 26 023 A1 ist eine Vorrichtung zur Zufuhr von Flüssigkeit zum Schneidbereich eines Werkzeuges bekannt. Diese bekannte Vorrichtung weist einen Werkzeughalter mit einer inneren Flüssigkeitsleitung und ein Vorderende mit einer ringförmigen Flüssigkeitszufuhrrinne auf. Die Flüssigkeitszufuhrrinne ist mit der Flüssigkeitsleitung verbunden. Mit der ringförmigen Flüssigkeitszufuhrrinne sind außerdem die Düsen eines Düsenringes verbunden. Ein Verbindungsring ist mit dem Vorderende des Werkzeughalters verschraubt, um den Düsenring mit dem Werkzeughalter loslösbar zu verbinden. Die Flüssigkeit wird aus den Düsen zum Schneidbereich des Werkzeuges ausgegeben. Der Düsenring kann beispielsweise mit zwei Arten von Düsen versehen sein, nämlich mit gegen das Basisende des Werkzeuges und mit gegen die Spitze des Werkzeuges gerichteten Düsen. Die Düsen sind am Düsenring in Umfangsrichtung gleichmäßig beabstandet vorgesehen. Um die Sprührichtung der Flüssigkeit variieren zu können, können die Düsen als am Düsenring befestigte Kugeldüsen ausgebildet sein. Durch die verstellbaren Düsen kann der Winkel der aus den Düsen ausgegebenen Flüssigkeit in Bezug auf die Rotationsachse des Werkzeuges eingestellt werden. Diese Einstellung der Düsen ist jedoch mit einem erheblichen Aufwand verbunden.

Der Erfindung liegt die Aufgabe zugrunde, eine Einrichtung der eingangs genannten Art zu schaffen, bei der das Kühlmedium wie eine Kühlflüssigkeit, insbesondere Kühlwasser, gezielt zur jeweiligen Bearbeitungsstelle am Rand des Flachglas-Produktes gerichtet ist, so dass bei relativ geringem Kühlmedium-Verbrauch eine optimale Wärmeabfuhr und Randbearbeitung, d.h. Schleif- oder Polierarbeit am Rand des Flachglas-Produktes durchführbar ist.

Diese Aufgabe wird bei einer Einrichtung der eingangs genannten Art erfindungsgemäss durch die Merkmale des Anspruches 1 oder durch die Merkmale des Anspruches 2 gelöst. Bevorzugte Aus- bzw. Weiterbildungen der erfindungsgemäßen Einrichtung sind in den Unteransprüchen gekennzeichnet.

Beispielsweise weist der Kühlkranz einen Durchmesser von 250 mm auf, wobei beispielsweise 90 Düsenlöcher in Umfangsrichtung des Kühlkranzes verteilt vorgesehen sind. Selbstverständlich kann der Kühlkranz auch einen anderen Durchmesser und eine andere Anzahl Düsenlöcher besitzen. Die Düsenlöcher können gleichmäßig oder ungleichmäßig verteilt vorgesehen sein. Mit Hilfe des erfindungsgemäss ausgebildeten Kühlkranzes wird das Kühlmedium, beispielsweise eine Kühlflüssigkeit, insbesondere Kühlwasser, gezielt zum Bearbeitungsrand der jeweiligen Schleif- oder Polierscheibe - oder eines Fräswerkzeuges - und somit gezielt zum Rand des zu bearbeitenden Gegenstandes, wie beispielsweise eines Flachglas-Produktes, gerichtet, so dass bei relativ geringem Kühlmedium-Verbrauch eine optimale Kühlung erzielt wird. Aus dieser optimalen Kühlung resultiert eine optimale Schleif- oder Polierarbeit. Entsprechendes gilt für eine Fräsarbeit an einem Gegenstand.

Demselben Zwecke, d.h. einer optimalen Bearbeitung bei geringem Kühlmedium-Verbrauch, ist es dienlich, wenn bei der erfindungsgemäßen Einrichtung die Düsenlöcher außerdem jeweils mit der Umfangsrichtung des Werkzeuges einen zweiten spitzen Winkel einschließen. Dieser zweite spitze Winkel ist vorzugsweise mit der Drehrichtung des Werkzeuges mitlaufend orientiert, so dass das Kühlmedium beispielsweise in Gestalt einer Kühlflüssigkeit gleichsam mit dem rotierenden Werkzeug mitgenommen wird. Auf diese Weise ist der Kühlmittel-Einsatz weiter optimierbar und die Kühlwirkung weiter verbesserbar, was bedeutet, dass die Werkzeugleistung weiter erhöht werden kann.

Erfindungsgemäß weist das Werkzeug mindestens zwei Werkzeugelemente unterschiedlichen Durchmessers auf, die in Richtung der Werkzeug-Achse verstellbar vorgesehen sind. Hierdurch ist es in vorteilhafter Weise möglich, Randkonturen mit verschiedenen Krümmungsradien einfach, zeitsparend und optimal zu bearbeiten. Dabei sind erfindungsgemäß die Düsenlöcher im Kühlkranz in zu den Werkzeugelementen zugeordneten, axial gegeneinander versetzten Reihen von Düsenlöchern vorgesehen, oder es sind erfindungsgemäß die zu den mindestens zwei Werkzeugelementen unterschiedlichen Durchmessers zugeordneten Düsenlöcher in der gleichen Kranzebene voneinander beabstandet und sich abwechselnd vorgesehen.

Das Werkzeug mit den mindestens zwei Werkzeugelementen unterschiedlichen Durchmessers wird vorzugsweise mittels einer CNC-Steuerung am zu bearbeitenden Rand des Gegenstandes, wie beispielsweise eines Flachglas-Produktes, entlang bewegt. Mit Hilfe der CNC-Steuerung werden gleichzeitig auch die zu dem im Bearbeitungseinsatz befindlichen Werkzeugelement zugehörigen Düsenlöcher angesteuert, um das Kühlmedium auszugeben.

Bei dem jeweiligen Werkzeugelement handelt es sich insbesondere um eine Schleif- oder Polierscheibe eines bestimmten Durchmessers.

Die zu den Werkzeugelementen unterschiedlichen Durchmessers zugeordneten Düsenlöcher im Kühlkranz weisen vorzugsweise unterschiedliche erste und zweite spitze Winkel auf, um das jeweilige, in Einsatz befindliche Werkzeugelement gezielt an seinem Umfang bzw. an der Bearbeitungsstelle am Rande des zu bearbeitenden Gegenstandes, wie z.B. eines Flachglas-Produktes, zu kühlen.

Erfindungsgemäss ist es möglich, dass die zu den mindestens zwei Werkzeugelementen unterschiedlichen Durchmessers zugeordneten Düsenlöcher mit einem gemeinsamen, im Kühlkranz ausgebildeten Ringkanal verbunden sind. Bei einer derartigen Ausbildung strömt das Kühlmedium beispielsweise in Gestalt einer Kühlflüssigkeit, insbesondere Kühlwasser, jederzeit durch alle Düsenlöcher. Um den Kühlmedium-Verbrauch weiter zu reduzieren, ist es bevorzugt, wenn die zum jeweiligen Werkzeugelement zugeordneten Düsenlöcher mit einem zugehörigen, im Kühlkanal ausgebildeten Ringkanal verbunden sind. Bei einer solchen Ausbildung der zuletzt genannten Art ist es zweckmäßig, wenn zur Verstellung der Werkzeugelemente in Richtung der Werkzeug-Achse ein Verstellantrieb vorgesehen ist, und wenn die im Kühlkranz ausgebildeten Ringkanäle jeweils mit einer Kühlmedium-Zulauf- und Absperreinrichtung verbunden sind, die mit dem Verstellantrieb über die oben erwähnte CNC-Steuerung zusammengeschaltet sind. Eine derartige erfindungsgemäße Einrichtung weist den Vorteil auf, dass das jeweils passende Werkzeugelement einfach und zeitsparend zu dem zu bearbeitenden Rand des zu bearbeitenden Gegenstandes, wie beispielsweise eines Flachglas-Produktes, zugestellt und simultan der jeweils passende Ringkanal mit Kühlmedium versorgt werden kann. Die Einstellarbeit ist folglich auf ein Minimum reduziert, wobei gleichzeitig eine optimale Kühlung des jeweils in Einsatz befindlichen Werkzeugelementes gewährleistet wird.

Erfindungsgemäss ist es möglich, dass der mindestens eine im Kühlkranz ausgebildete Ringkanal ununterbrochen ausgebildet ist, wobei dem/jedem Ringkanal eine Kühlmedium-Zulauf- und Absperreinrichtung zugeordnet ist. Bei einer solchen Ausbildung der erfindungsgemäßen Einrichtung wird das flüssige oder gasförmige Kühlmedium aus dem jeweiligen Ringkanal über den gesamten Umfang des Kühlkranzes ausgegeben. Um das Kühlmedium nicht entlang des gesamten Umfanges des Werkzeugelementes, d.h. der Schleif- oder Polierscheibe eines bestimmten Durchmessers, auszugeben, sondern tatsächlich nur an der Bearbeitungsstelle gezielt zum Werkzeugelement zuzuführen, ist es bevorzugt, wenn der mindestens eine im Kühlkranz ausgebildete Ringkanal in voneinander getrennte Kanalsegmente unterteilt ist, wobei jedem Kanalsegment eine ansteuerbare Kühlmedium-Zufuhr- und Absperreinrichtung zugeordnet ist.

Die erfindungsgemäße Einrichtung weist die Vorteile auf, dass die Einsatzmenge an gasförmigem oder flüssigem Kühlmedium, insbesondere Kühlwasser, zur Erzielung einer optimalen Kühlung des Werkzeuges bzw. des jeweiligen Werkzeugelementes eines bestimmten Durchmessers minimal ist, und dass es außerdem einfach und zeitsparend möglich ist, das jeweils passende Werkzeug, d.h. das passende Werkzeugelement eines bestimmten Durchmessers, einfach und zeitsparend zum Rand des zu bearbeitenden Gegenstandes, wie beispielsweise eines Flachglas-Produktes, zuzustellen und gleichzeitig auch das Kühlmedium passend zu dem im Einsatz befindlichen Werkzeug bzw. Werkzeugelement zu richten.

Weitere Einzelheiten, Merkmale und Vorteile ergeben sich aus der nachfolgenden Beschreibung von in der Zeichnung dargestellten Ausführungsbeispielen der erfindungsgemäßen Einrichtung bzw. wesentlicher Einzelheiten derselben.

Es zeigen -:
- Figur 1: schematisch in einer Ansicht von oben einen Abschnitt eines an seinem Rand zu bearbeitenden, d.h. zu schleifenden oder zu polierenden Gegenstandes in Form eines Flachglas-Produktes sowie ein dafür vorgesehenes Werkzeug in Form einer Schleif- oder Polierscheibe,
- Figur 2: eine Schleif- oder Polierscheibe kombiniert mit einem schematisch verdeutlichten Düsenloch in einer Ansicht von oben,
- Figur 3: die Schleifscheibe und das Düsenloch gemäss Figur 2 in einer Seitenansicht, d.h. in Blickrichtung des Pfeiles III in Figur 2,
- Figur 4: eine schematische Darstellung eines Kühlkranzes mit einem ununterbrochen umlaufenden Ringkanal, wobei einige der Düsenlöcher verdeutlicht sind,
- Figur 5: eine der Figur 4 ähnliche Darstellung einer anderen Ausbildung des Kühlkranzes mit einem Ringkanal, der in voneinander getrennte Kanalsegmente unterteilt ist, wobei einige der Düsenlöcher - ähnlich wie in Figur 4 - dargestellt sind,
- Figur 6: eine der Figur 1 ähnliche schematische Darstellung zur Verdeutlichung einer Einrichtung mit einem segmentierten Kühlkanal gemäss Figur 5 zur Verdeutlichung der jeweils in Einsatz befindlichen, d.h. aktiven, Kanalsegmente,
- Figur 7: eine der Figur 6 ähnliche Darstellung zur Verdeutlichung der an einem anderen Randabschnitt des Flachglas-Produktes in Einsatz befindlichen aktiven Kanalsegmente des Kühlkranzes gemäss Figur 5,
- Figur 8: einen Schnitt durch eine Ausbildung der Einrichtung mit einem Werkzeug, d.h. mit einer Schleif- oder Polierscheibe eines bestimmten Durchmessers,
- Figur 9: eine Draufsicht auf die Einrichtung gemäss Figur 8 in Blickrichtung des Pfeile IX in Figur 8,
- Figur 10: perspektivisch in einer Explosionsdarstellung einen Abschnitt einer anderen Ausbildung der Einrichtung,
- Figur 11: eine räumliche Darstellung eines Kühlkranzes mit einem ununterbrochen umlaufenden Ringkanal und in zwei Reihen angeordneten Düsenlöchern mit unterschiedlichen ersten und zweiten spitzen Winkeln,
- Figur 12: eine räumliche Darstellung eines Abschnittes einer anderen Ausbildung des Kühlkranzes mit zwei ununterbrochen umlaufenden Ringkanälen, welchen jeweils Düsenlöcher eines bestimmten ersten und zweiten spitzen Winkels zugeordnet sind, und
- Figur 13: perspektivisch einen Abschnitt einer Ausbildung der Einreichung mit einem Kühlkranz gemäss Figur 12, wobei die Ringkanäle jedoch segmentiert sind.

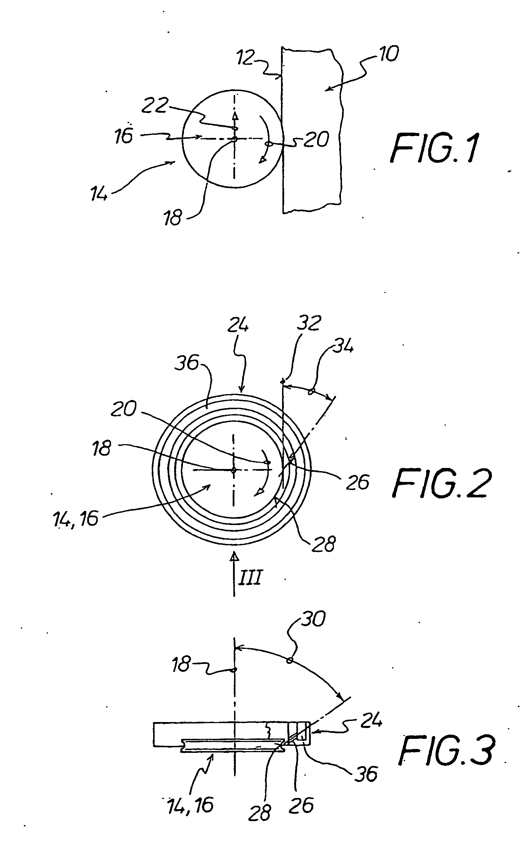

Figur 1 zeigt einen Abschnitt eines Flachglas-Produktes 10, bei dem es sich beispielsweise um einen Regalboden, eine Glastüre, eine Kraftfahrzeug-Scheibe od. dgl. handelt. Das Flachglas-Produkt 10 weist einen Rand 12 auf, der mit Hilfe eines CNC-gesteuerten Werkzeuges 14 geschliffen oder poliert wird. Bei dem Werkzeug 14 handelt es sich um eine Schleif- oder Polierscheibe 16 eines bestimmten Durchmessers. Die Schleif- oder Polierscheibe 16 wird um ihre Werkzeug-Achse 18 rotativ angetrieben. Die Drehrichtung der Schleif- oder Polierscheibe 16 ist durch den bogenförmigen Pfeil 20 angedeutet. Der durch den Pfeil 22 angedeutete Vorschub der Schleif- oder Polierscheibe 16 parallel zum zu bearbeitenden Rand 12 des Flachglas-Produktes 10 erfolgt in einer zur Drehrichtung 20 der Schleif- oder Polierscheibe 16 entgegengesetzten Richtung, um eine optimale Schleif- oder Polierarbeit zu erzielen.

Figur 2 verdeutlicht schematisch das Werkzeug 14 in Form einer Schleif- oder Polierscheibe 16 sowie einen zum Werkzeug 14 konzentrisch vorgesehenen Kühlkranz 24, der in Umfangsrichtung gleichmässig verteilt Düsenlöcher aufweist. In Figur 2 ist nur eines der Düsenlöcher schematisch dargestellt und mit der Bezugsziffer 26 bezeichnet. Wie auch aus Figur 3 ersichtlich ist, ist das jeweilige Düsenloch 26 zum Umfangsrand 28 der Schleif- oder Polierscheibe 16 gerichtet, um eine optimale Kühlung der Schleif- oder Polierscheibe 16 bei minimalem Kühlmittel-Einsatz zu gewährleisten.

Das jeweilige Düsenloch 26 schließt mit der Rotationsachse 18, d.h. mit der Werkzeugachse des Werkzeuges 14, d.h. der Schleif- oder Polierscheibe 16, einen ersten spitzen Winkel 30 (sh. Figur 3) ein. Die Figur 2 verdeutlicht, dass das jeweilige Düsenloch 26 mit der Umfangsrichtung der Schleif- oder Polierscheibe 16, d.h. mit der jeweiligen Tangente 32, einen zweiten spitzen Winkel 34 einschließt. Aus Figur 2 ist außerdem ersichtlich, dass der zweite spitze Winkel 34 mit der Drehrichtung 20 des Werkzeuges 14, d.h. der Schleif- oder Polierscheibe 16, mitlaufend orientiert ist.

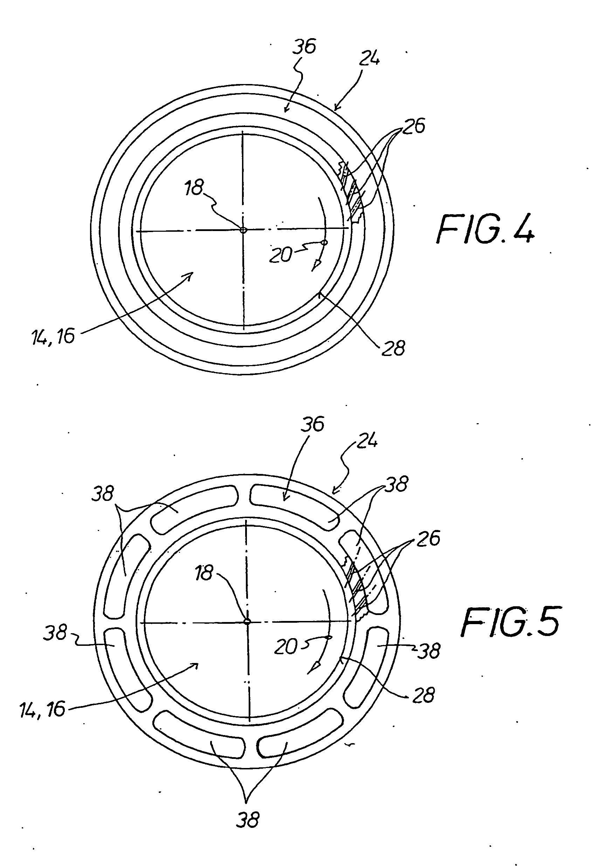

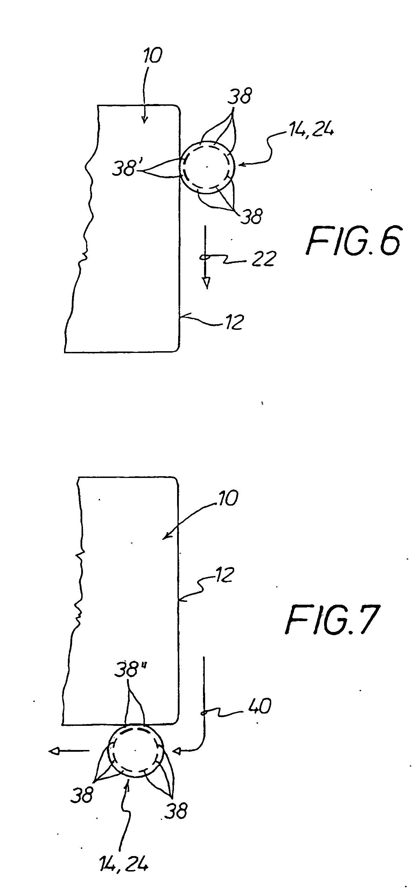

Figur 4 verdeutlicht in einer der Figur 2 ähnlichen Darstellung schematisch einen Kühlkranz 24 mit einem Ringkanal 36, der im Kühlkranz 24 in Umfangsrichtung ununterbrochen umlaufend ausgebildet ist. Mit der Bezugsziffer 26 sind einige der im Kühlkranz 24 ausgebildeten Düsenlöcher bezeichnet, die in Umfangsrichtung des Kühlkranzes 24 äquidistant vorgesehen sind. Demgegenüber verdeutlicht die Figur 5 eine Ausbildung des Kühlkranzes 24, wobei der Ringkanal 36 in voneinander getrennte Kanalsegmente 38 unterteilt ist.

Gleiche Einzelheiten sind in den Figuren 4 und 5 mit denselben Bezugsziffern wie in den Figuren 1 bis 3 bezeichnet, so dass es sich erübrigt, in Verbindung mit den Figuren 4 und 5 alle diese Einzelheiten noch einmal detailliert zu beschreiben.

Figur 6 verdeutlicht in einer der Figur 1 ähnlichen Darstellung einen Abschnitt eines an seinem Rand 12 zu bearbeitenden Flachglas-Produktes 10, wobei eine Einrichtung mit einem Kühlkranz 24 zur Anwendung gelangt, wie er in Figur 5 schematisch verdeutlicht ist, d.h. der in Umfangsrichtung gleichmässig verteilt eine Anzahl Kanalsegmente 38 aufweist. Mit dickeren Linien sind die beiden dem Rand 12 des Flachglas-Produktes 10 zugewandten Kanalsegmente 38' verdeutlicht. Bei diesen beiden Kanalsegmenten 38' handelt es sich um die Kanalsegmente, die mit Kühlflüssigkeit, insbesondere Kühlwasser, beaufschlagt werden, während die restlichen Kanalsegmente 38 nicht mit Kühlflüssigkeit, d.h. Kühlwasser, beaufschlagt sind, so dass der Kühlmittel-Einsatz entsprechend reduziert ist. In Figur 6 ist des weiteren die Vorschubrichtung 22 des Werkzeuges bezeichnet. Die Figur 7 verdeutlicht durch den abgewinkelten Pfeil 40 den Übergang der Schleif- oder Poliereinrichtung von einem Abschnitt des Randes 12 zu einem anderen, mit dem ersten Abschnitt einen Winkel einschließenden zweiten Randabschnitt. Während dieses Überganges von einem Randabschnitt zu einem anderen Randabschnitt wird auf die zum neuen Randabschnitt zugewandten Kanalsegmente 38" umgeschaltet. Die übrigen Kanalsegmente 38 werden wiederum nicht mit Kühlflüssigkeit, d.h. Kühlwasser, beaufschlagt.

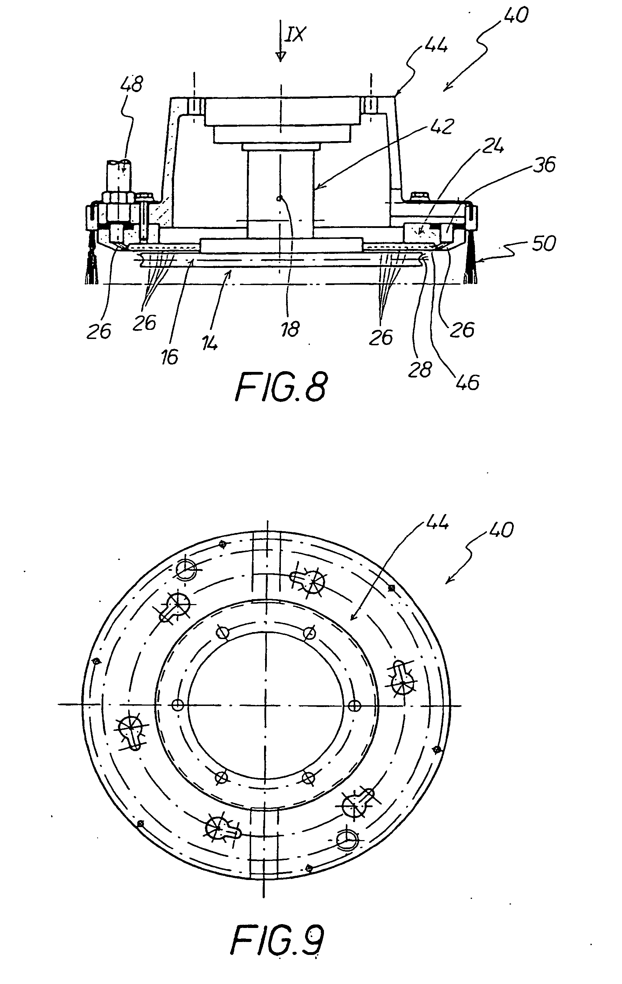

Figur 8 zeigt in einer Schnittdarstellung eine Ausbildung der Einrichtung 40 zum Bearbeiten des Randes 12 eines Flachglas-Produktes 10. Die Einrichtung 40 weist eine Einspanneinrichtung 42 für ein Werkzeug 14 auf. Das Werkzeug 14 ist von einer Schleif- oder Polierscheibe 16 gebildet.

Die Einrichtung 40 weist ein Gehäuse 44 auf, das als Gehäuse-Glocke ausgebildet ist. Mit dem Gehäuse 44 ist ein Kühlkranz 24 dicht verbunden, der mit einem Ringkanal 36 (sh. beispielsweise auch Figur 4) ausgebildet ist. Der Kühlkranz 24 ist entlang seines Umfanges an seiner dem Werkzeug 14 zugewandten Innenseite 46 mit Düsenlöchern 26 ausgebildet, die sich zum Ringkanal 36 erstrecken. An den Ringkanal 36 ist ein Kühlflüssigkeit-Einlass 48 angeschlossen.

Um ein seitliches Wegspritzen der Kühlflüssigkeit zu vermeiden, ist am Gehäuse 44 der Einrichtung 40 umlaufend ein Bürstenvorhang 50 vorgesehen.

Figur 9 zeigt eine Draufsicht auf die Einrichtung 40 gemäss Figur 8.

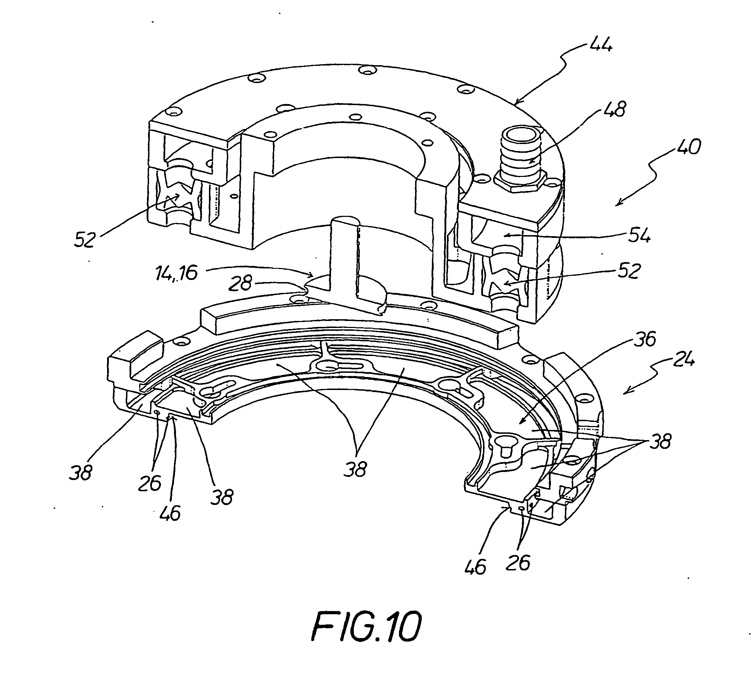

Figur 10 zeigt abgeschnitten in einer räumlichen Explosions-Darstellung eine Ausbildung der Einrichtung 40 mit einem Kühlkranz 24, einem Gehäuse 44 und einem Werkzeug 14, wobei der Kühlkranz 24 mit voneinander getrennten Kanalsegmenten 38 ausgebildet ist. Jedem Kanalsegment 38 ist im Gehäuse 44 eine Kühlflüssigkeit-Zulauf- und Absperreinrichtung 52 zugeordnet. Das Gehäuse 44 weist einen umlaufenden Versorgungskanal 54 auf, an den ein Kühlflüssigkeit-Einlass 48 angeschlossen ist. Mit der Bezugsziffer 26 sind auch in Figur 10 Düsenlöcher bezeichnet, die sich vom jeweiligen Kanalsegment 38 zur Innenseite 36 des Kühlkranzes 24 erstrecken.

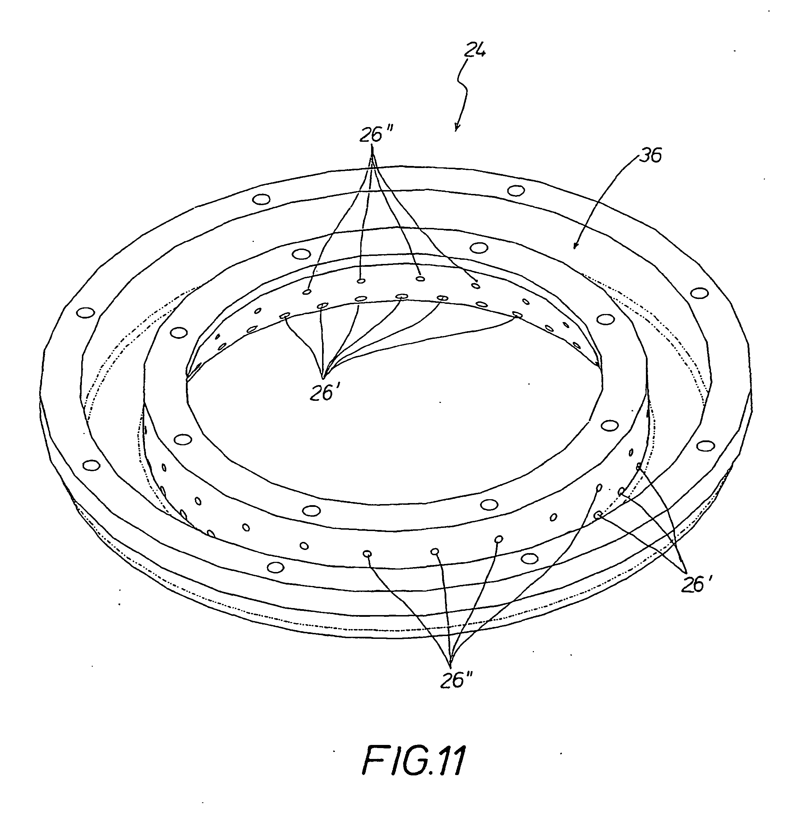

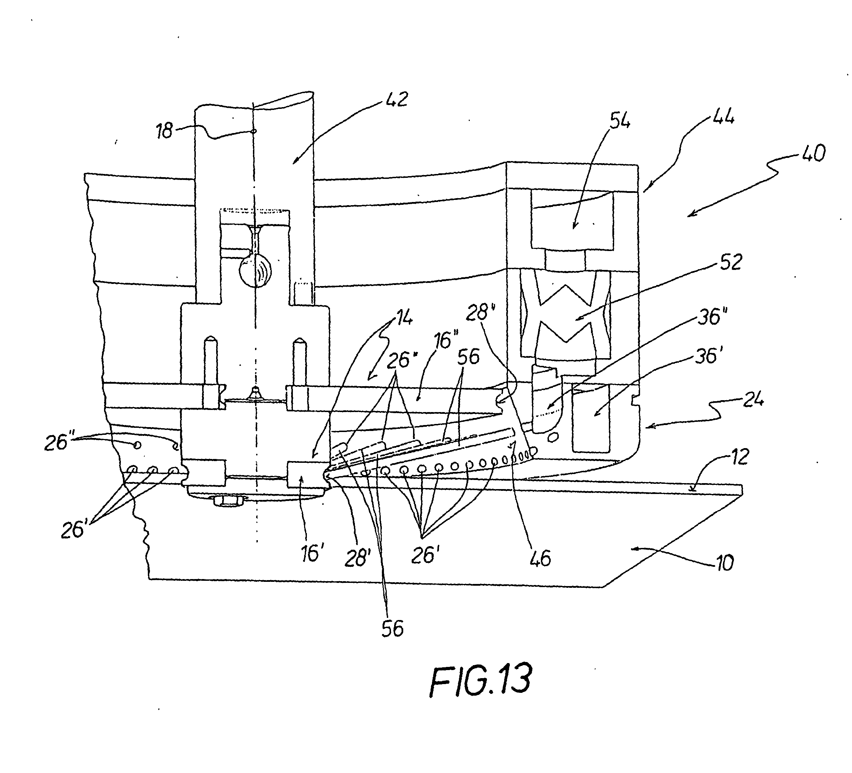

Figur 11 zeigt eine Ausbildung des Kühlkranzes 24 mit einem ununterbrochen umlaufenden Ringkanal 36. Der Kühlkranz 24 ist mit Düsenlöchern 26' und mit Düsenlöchern 26" ausgebildet, die axial gegeneinander versetzt in zwei Reihen vorgesehen sind. Die Düsenlöcher 26' sind einem Werkzeugelement, d.h. einer Schleif- oder Polierscheibe 16' eines bestimmten Durchmessers, zugeordnet und die Düsenlöcher 26" sind einem Werkzeugelement, d.h. einer Schleif- oder Polierscheibe 16" eines anderen Durchmessers (sh. Figur 13) zugeordnet. Die Düsenlöcher 26' und 26" weisen unterschiedliche erste und zweite spitze Winkel 30 und 34 (sh. die Figuren 2 und 3) auf.

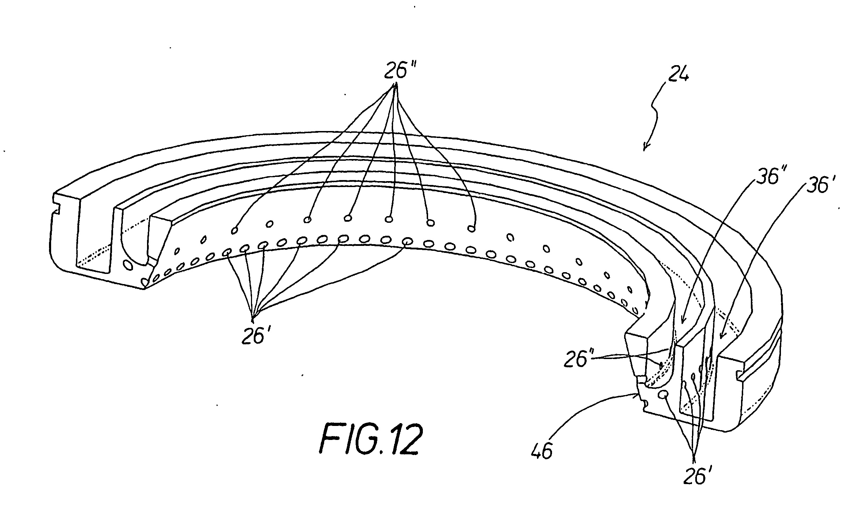

Die Figur 12 verdeutlicht perspektivisch einen Abschnitt eines Kühlkranzes 24, der ebenfalls Düsenlöcher 26' und 26" aufweist, die in voneinander axial beabstandeten Reihen vorgesehen sind. Die Düsenlöcher 26' sind bei der in Figur 12 dargestellten Ausbildung des Kühlkranzes 24 jedoch einem Ringkanal 36' und die Düsenlöcher 26" einem Ringkanal 36" zugeordnet. Die Ringkanäle 36' und 36" sind voneinander getrennt, sie können ununterbrochen umlaufend oder - ähnlich wie in den Figuren 5 und 10 dargestellt - mit voneinander getrennten Kanalsegmenten 32 ausgebildet sein.

Figur 13 verdeutlicht abschnittweise perspektivisch eine Ausbildung der Einrichtung 40 zum Bearbeiten, d.h. zum Schleifen oder Polieren des Randes 12 eines Flachglas-Produktes 10. An der Einspann-Einrichtung 42 der Einrichtung 40 sind zwei Werkzeugelemente, d.h. Schleif- und Polierscheiben 16' und 16" mit unterschiedlichen Durchmessern befestigt.

Die Einrichtung 40 weist ein Gehäuse 44 - ähnlich dem in Figur 10 dargestellten Gehäuse 44 - auf. Mit dem Gehäuse 44 ist ein Kühlkranz 24 dicht und fest verbunden, der ähnlich wie der in Figur 12 abschnittweise gezeichnete Kühlkranz 24 ausgebildet ist, der jedoch mit Kanalsegmenten 38 seiner beiden Ringkanäle 36' und 36" ausgebildet ist, so dass nur die jeweils zum Rand 12 des Flachglas-Produktes 10 benachbarten Kanalsegmente 38' bzw. 38" (sh. die Figuren 6 und 7) mit Kühlflüssigkeit, d.h. Kühlwasser, beaufschlagt werden. Das ist in Figur 13 durch die auf der rechten Seite zur Schleif- oder Polierscheibe 16' kleinen Durchmessers zugehörigen Wasserstrahlen 56 verdeutlicht. Die Düsenlöcher 26', die zur nicht im Einsatz befindlichen Schleif- oder Polierscheibe 16" zugehörig sind, sind nicht aktiviert. Desgleichen sind die in Figur 13 auf der linken Seite der Einspann-Einrichtung 42 gezeichneten Düsenlöcher 26", die zu inaktiven Kanalsegmenten 38 (sh. auch die Figuren 6 und 7) zugehören, nicht aktiviert.

## Patentansprüche

1. Einrichtung zum Bearbeiten des Randes (12) eines Gegenstandes wie beispielsweise von Flachglas-Produkten (10), mit einem um eine Achse (18) rotierenden Werkzeug (14), wie eine Schleif- oder Polierscheibe (16) oder ein Fräswerkzeug, und mit einer dem Werkzeug (14) zugeordneten Kühleinrichtung für eine Kühlflüssigkeit, insbesondere für Kühlwasser,
**dadurch gekennzeichnet,**
**dass** die Kühleinrichtung einen das Werkzeug (14) umgebenden, umschließenden Kühlkranz (24) aufweist, der an seiner dem Werkzeug (14) zugewandten Innenseite (46) in Umfangsrichtung verteilt Düsenlöcher (26) aufweist, die mit der Rotationsachse (18) des Werkzeuges (14) jeweils einen ersten spitzen Winkel (30) einschließen, wobei das Werkzeug (14) mindestens zwei Werkzeugelemente (16) unterschiedlichen Durchmessers aufweist, die in Richtung der Werkzeug-Achse (18) verstellbar vorgesehen sind, und wobei die Düsenlöcher (26) im Kühlkranz (24) in zu den Werkzeugelementen (16) zugeordneten, axial gegeneinander versetzten Reihen von Düsenlöchern (26', 26") vorgesehen sind.

2. Einrichtung zum Bearbeiten des Randes (12) eines Gegenstandes wie beispielsweise von Flachglas-Produkten (10), mit einem um eine Achse (18) rotierenden Werkzeug (14), wie eine Schleif- oder Polierscheibe (16) oder ein Fräswerkzeug, und mit einer dem Werkzeug (14) zugeordneten Kühleinrichtung für eine Kühlflüssigkeit, insbesondere für Kühlwasser,
**dadurch gekennzeichnet ,**
**dass** die Kühleinrichtung einen das Werkzeug (14) umgebenden und allseitig umschließenden Kühlkranz (24) aufweist, der an seiner dem Werkzeug (14) zugewandten Innenseite (46) in Umfangsrichtung verteilt Düsenlöcher (26) aufweist, die mit der Rotationsachse (18) des Werkzeuges (14) jeweils einen ersten spitzen Winkel (30) einschließen, wobei das Werkzeug (14) mindestens zwei Werkzeugelemente (16) unterschiedlichen Durchmessers aufweist, die in Richtung der Werkzeug-Achse (18) verstellbar vorgesehen sind, und wobei die zu den mindestens zwei Werkzeugelementen (16) unterschiedlichen Durchmessers zugeordneten Düsenlöcher (26', 26") in der gleichen Kranzebene voneinander beabstandet und sich abwechselnd vorgesehen sind.

3. Einrichtung nach Anspruch 1 oder 2,
**dadurch gekennzeichnet,**
**dass** die Düsenlöcher (26) außerdem jeweils mit der Umfangsrichtung (32) des Werkzeuges (14) einen zweiten spitzen Winkel (34) einschließen.

4. Einrichtung nach Anspruch 3,
**dadurch gekennzeichnet,**
**dass** der zweite spitze Winkel (34) mit der Drehrichtung (20) des Werkzeuges (14) mitlaufend orientiert ist.

5. Einrichtung nach Anspruch 1 oder 2,
**dadurch gekennzeichnet,**
**dass** die zu den Werkzeugelementen (16) unterschiedlichen Durchmessers zugeordneten Düsenlöcher (26', 26") unterschiedliche erste und zweite spitze Winkel (30 und 34) aufweisen.

6. Einrichtung nach Anspruch 1 oder 2,
**dadurch gekennzeichnet ,**
**dass** die zu den mindestens zwei Werkzeugelementen (16) unterschiedlichen Durchmessers jeweils zugeordneten Düsenlöcher (26', 26") mit einem gemeinsamen im Kühlkranz (24) ausgebildeten Ringkanal (36) verbunden sind.

7. Einrichtung nach Anspruch 1 oder 2,
**dadurch gekennzeichnet,**
**dass** die zum jeweiligen Werkzeugelement (16) zugeordneten Düsenlöcher (26', 26") mit einem zugehörigen, im Kühlkranz (24) ausgebildeten Ringkanal (36', 36") verbunden sind.

8. Einrichtung nach Anspruch 7,
**dadurch gekennzeichnet,**
**dass** zur Verstellung der Werkzeugelemente (16) in Richtung der Werkzeug-Achse (18) ein Verstellantrieb vorgesehen ist, und dass die im Kühlkranz (24) ausgebildeten Ringkanäle (36', 36") jeweils mit einer Kühlmedium-Zufuhr- und Absperreinrichtung (52) verbunden sind, die mit dem Verstellantrieb über eine Steuerungseinrichtung zusammengeschaltet sind.

9. Einrichtung nach einem der Ansprüche 6 bis 8,
**dadurch gekennzeichnet ,**
**dass** der mindestens eine im Kühlkranz (24) ausgebildete Ringkanal (36) ununterbrochen ausgebildet ist, wobei dem/jedem Ringkanal (36; 36', 36") eine Kühlmedium-Zulauf- und Absperreinrichtung (52) zugeordnet ist.

10. Einrichtung nach einem der Ansprüche 6 bis 9,
**dadurch gekennzeichnet ,**
**dass** der mindestens eine im Kühlkranz (24) ausgebildete Ringkanal (36; 36', 36") in voneinander getrennte Kanalsegmente (38) unterteilt ist, wobei jedem Kanalsegment (38) eine Kühlmedium-Zulauf- und Absperreinrichtung (52) zugeordnet ist.

## Claims

1. Device for machining the edge (12) of a workpiece, such as, for example, of flat glass products (10), having a tool (14) which rotates about an axis (18), such as a grinding or polishing disc (16) or a milling tool, and having a cooling device for a cooling liquid, in particular for cooling water, which device is assigned to the tool (14), **characterized in that** the cooling device has a cooling ring (24) which surrounds and encloses the tool (14) and has, distributed in the circumferential direction on its inside (46) which faces the tool (14), nozzle holes (26) which in each case enclose a first acute angle (30) with the axis of rotation (18) of the tool (14), the tool (14) having at least two tool elements (16) of different diameter which are provided in a manner such that they can be adjusted in the direction of the tool axis (18), and the nozzle holes (26) being provided in the cooling ring (24) in rows of nozzle holes (26', 26'') which are assigned to the tool elements (16) and are offset axially with respect to one another.

2. Device for machining the edge (12) of a workpiece, such as, for example, of flat glass products (10), having a tool (14) which rotates about an axis (18), such as a grinding or polishing disc (16) or a milling tool, and having a cooling device for a cooling liquid, in particular for cooling water, which device is assigned to the tool (14), **characterized in that** the cooling device has a cooling ring (24) which surrounds the tool (14) and encloses it on all sides and has, distributed in the circumferential direction on its inside (46) which faces the tool (14), nozzle holes (26) which in each case enclose a first acute angle (30) with the axis of rotation (18) of the tool (14), the tool (14) having at least two tool elements (16) of different diameter which are provided in a manner such that they can be adjusted in the direction of the tool axis (18), and the nozzle holes (26', 26''), which are assigned to the at least two tool elements (16) of different diameter, are provided spaced apart from one another and in an alternating manner in the same ring plane.

3. Device according to Claim 1 or 2, **characterized in that** the nozzle holes (26) also in each case enclose a second acute angle (34) with the circumferential direction (32) of the tool (14).

4. Device according to Claim 3, **characterized in that** the second acute angle (34) is oriented in a manner such that it runs together with the rotational direction (20) of the tool (14).

5. Device according to Claim 1 or 2, **characterized in that** the nozzle holes (26', 26'') which are assigned to the tool elements (16) of different diameter have different first and second acute angles (30 and 34).

6. Device according to Claim 1 or 2, **characterized in that** the nozzle holes (26', 26'') which are assigned in each case to the at least two tool elements (16) of different diameter are connected to a common annular duct (36) formed in the cooling ring (24).

7. Device according to Claim 1 or 2, **characterized in that** the nozzle holes (26', 26'') which are assigned to the particular tool element (16) are connected to an associated annular duct (36', 36'') formed in the cooling ring (24).

8. Device according to Claim 7, **characterized in that** an adjusting drive is provided for adjusting the tool elements (16) in the direction of the tool axis (18), and **in that** the annular ducts (36', 36'') formed in the cooling ring (24) are connected in each case to a cooling-medium supply and shutting-off device (52) which are connected to the adjusting drive via a control device.

9. Device according to one of Claims 6 to 8,
**characterized in that** the at least one annular duct (36) formed in the cooling ring (24) is of uninterrupted design, with a cooling-medium supply and shutting-off device (52) being assigned to the/each annular duct (36; 36', 36'').

10. Device according to one of Claims 6 to 9,
**characterized in that** the at least one annular duct (36; 36', 36'') formed in the cooling ring (24) is subdivided into duct segments (38) which are separated from one another, with a cooling-medium supply and shutting-off device (52) being assigned to each duct segment (38).

## Revendications

1. Dispositif pour l'usinage du bord (12) d'un objet, comme par exemple des produits en verre plat (10), du type comportant un outil (14) monté rotatif autour d'un axe (18), comme un disque à meuler ou à polir (16), ou un outil à fraiser, et un dispositif de refroidissement, associé à l'outil (14), par un liquide refroidissant, en particulier de l'eau de refroidissement, **caractérisé en ce que** le dispositif de refroidissement comporte une couronne de refroidissement (24) entourant l'outil (14) en l'enfermant, qui, sur sa face intérieure (46) tournée vers l'outil (14), présente des orifices de projection (26), répartis dans la direction périphérique, et qui font chacun, avec l'axe (18) un premier angle aigu (30), l'outil (14) comportant au moins deux éléments d'outil (16) de diamètres différents, qui sont prévus réglables dans la direction de l'axe (18) de l'outil, et les orifice de projection (26) étant prévus dans la couronne de refroidissement (24) en rangées d'orifices de projection (26', 26"), décalées axialement l'une par rapport à l'autre, et par rapport aux éléments d'outils (16).

2. Dispositif pour l'usinage du bord d'un (12) objet, comme par exemple des produits en verre plat (10), du type comportant un outil (14) monté rotatif autour d'un axe (18), comme un disque à meuler ou à polir (16) ou un outil à fraiser, et un dispositif de refroidissement associé à l'outil (14), par un liquide refroidissant, en particulier de l'eau de refroidissement, **caractérisé en ce que** le dispositif de refroidissement comporte une couronne de refroidissement (24) entourant l'outil (14) en l'enfermant, qui, sur sa face intérieure (46) tournée vers l'outil (14), présente des orifices de projection (26) répartis en direction périphérique, et qui font chacun, avec l'axe (18) un premier angle aigu (30), l'outil (14) comportant au moins deux éléments d'outils (16) de diamètres différents, qui sont prévus réglables dans la direction de l'axe (18) de l'outil (14), les orifices de projection (26', 26") pratiqués dans les éléments d'outils de diamètres différents (16) étant prévus dans les mêmes plans de la couronne, espacés l'un de l'autre et alternés.

3. Dispositif selon la revendication 1 ou 2, **caractérisé en ce que** les orifices de projection (26) font au surplus chacun un second angle aigu (34) avec la direction périphérique (32) de l'outil (14).

4. Dispositif selon la revendication 3, **caractérisé en ce que** le second angle aigu (34) est orienté dans la direction de rotation (20) de l'outil (14).

5. Dispositif selon la revendication 1 ou 2, **caractérisé en ce que** les orifices de projection (26' 26") pratiqués dans les éléments d'outils de diamètres différents (16) présentent un premier et un second angle aigu (30 et 34) différents.

6. Dispositif selon la revendication 1 ou 2, **caractérisé en ce que**, à chacun des orifices de projection (26', 26") des éléments d'outil (16) de diamètres différents, est relié un canal annulaire commun (36) pratiqué dans la couronne de refroidissement (24).

7. Dispositif selon la revendication 1 ou 2, **caractérisé en ce que** les orifices de projection (26', 26") pratiqués dans chacun des éléments d'outils (16) sont reliés à un canal annulaire (36', 36") correspondant pratiqué dans la couronne de refroidissement (24).

8. Dispositif selon la revendication 7, **caractérisé en ce que**, pour le réglage des éléments d'outil (16) dans la direction de l'axe d'outil (18), il est prévu une commande de réglage, et **en ce que** chacun des canaux annulaires (36', 36") pratiqués dans la couronne de refroidissement (24) est relié à un système d'admission et d'arrêt d'agent de refroidissement (52), qui les actionne ensemble simultanément avec la commande de réglage, par l'intermédiaire d'un système de commande.

9. Dispositif selon l'une des revendications 6 à 8, **caractérisé en ce qu'**au moins un canal annulaire (36) est pratiqué sans interruption dans la couronne de refroidissement (24), à ce/chaque canal (36 ; 36', 36") étant associé un système d'admission et d'arrêt d'agent de refroidissement (52).

10. Dispositif selon l'une des revendications 6 à 9, **caractérisé en ce qu'**au moins un canal annulaire (36 ; 36', 36"), pratiqué dans la couronne de refroidissement (24), est subdivisé en segments de canal (38), à chaque segment de canal (38) étant associé un dispositif d'admission et d'arrêt d'agent de refroidissement (52).
